# EUROPEAN PATENT SPECIFICATION

(11) **EP 2 548 897 B1**
(45) Date of publication and mention of the grant of the patent: **14.05.2014**
(21) Application number: 12174416.3
(22) Date of filing: 29.06.2012
(51) Int. Cl.: C08F 6/16, C08F 14/18, C08F 214/22, C08F 6/00

(54) **Fluoropolymer composition**
Fluorpolymerzusammensetzung
Composition de fluoropolymère

(30) Priority: 22.07.2011 EP 11175111
(43) Date of publication of application: 23.01.2013
(73) Proprietor: Arkema Inc., King Of Prussia, PA 19406 (US)
(72) Inventor: Yen, Jeffrey, WOOLWICH TOWNSHIP, NJ New Jersey 08085 (US); Alexander, David H., AMBLER, PA Pennsylvania 19002 (US); Amin-Sanayei, Ramin, MALVERN, PA Pennsylvania 193555 (US)
(74) Representative: Albani, Dalila

(56) References cited:
- EP-A1- 1 942 118
- US-A1- 2005 113 507
- US-B2- 6 794 550

## Description

### Field of the Invention

The invention relates to a process that results in a fluoropolymer composition with improved chemical, thermal and color stabilities, and a reduced level of residual surfactants (both fluorosurfactants and non-fluorosurfactants. Such improvements, as indicated by total oxidizable carbon (TOC) and pellet yellowness index (YI), can be accomplished in a cost-effect manner through the use of a dewatering extruder. The dewatering extruder combines several typical unit operations into a single operation, producing solid fluoropolymer having a significantly reduced total oxidizable carbons , a lower yellowness index and minimal amounts of surfactants.

### Background of the Invention

Fluoropolymers are generally made by an aqueous dispersion process, which provides a suitable heat sink for controlling the heat of polymerization and can produce a high yield and high molecular weight relative to polymerization conducted in an organic solvent. In order to achieve stable dispersion or emulsion, a suitable surfactant or emulsifier must be employed. Fluorinated-surfactants are generally used because they can yield stable particles and high molecular weight fluoropolymers. However, the fluorinated-surfactants typically used in emulsion polymerization of fluoropolymers, such as the ammonium salt of perfluoro octanoic acid or salts of perfluoro sulfonic acids are expensive. They also present an environmental concern related to bio-persistence. Further, they can decompose during melt processing adding unwanted color to the polymer. It is therefore desired to reduce or minimize the amount of fluorosurfactant that remains with the final solid polymer products.

Some non-fluorinated surfactants can also be used for polymerization of fluoropolymers. These surfactants do not have the same environmental concerns as fluorosurfactants, but they contribute to the Total Oxidizable Carbon (TOC) content of the polymer. This is undesirable for high-purity applications (such as in electronic components). The TOC content also can decompose during melt processing adding unwanted color to the polymer. In these cases, it is therefore desired to reduce or minimize the amount of TOC due to non-fluorinated surfactant that remains with the final solid polymer products. (Can we use a different patent strategy emphasizing only the importance of a lower TOC here?)

Research and development efforts have gone into reducing the levels of fluorosurfactants present in a finished fluoropolymer. These include distillation, ion exchange, ultrafiltration, supercritical extraction, etc. US 6,794,550 discloses a process for removing fluorosurfactant from a latex by adding a non-fluorinated surfactant, then removing steam-volatile fluorosurfactants by distillation. US 6,593,416 discloses a similar method whereby a non-fluorosurfactant is added to the fluropolymer latex, followed by contact with an anion exchanger. US 4,369,266 describes a process adding a stabilizer, followed by ultrafiltration through a semi-permeable membrane. US 2006/0074178 discloses adding non-ionic emulsifier to a fluorpolymer latex followed by heating and decantationof a liquid fluorosurfactant layer. All of these disclosed processes involve the addition of a different emulsifier to stabilize the emulsion following removal of the flurosurfactant, and must be followed by additional steps to isolate the fluorpolymer solids. The additional surfactants become added impurities in the final product.

Dewatering extrusion has been used for emulsion polymers, and combines the steps of coagulation, washing, dewatering and venting/degassing in a single, twin-screw extruder unit operation. US 3,993,292; US 4,148,991; US 4,136,251; and US 6,287,470 disclose the use of dewatering extrusion, using either chemical coagulants or shear force to achieve coagulation. The use of chemical coagulants negatively effects the purity of the final product though the introduction of impurities. The mechanical shear delivered by these non-intermeshing extruders is not efficient or economical for coagulation and melting of fluoropolymers.

Surprisingly it has been found that the use of a dewatering extruder, with a steam coagulation step, provides an effective means for the isolation of solid fluoropolymer from an aqueous dispersion or suspension, and the resulting fluoropolymer contains extremely low levels of fluorosurfactant and other impurities. The dewatering process can produce fluoropolymer solids without the use of additional chemicals, and the fluoropolymer has a high color stability (little or no yellowing) during heat processing. The high purity fluoropolymers are especially useful in the electronic, semiconductor, or medical industries.

### Summary of the Invention

The invention relates to a fluoropolymer composition comprising fluoropolymer, and from 0.001 to less than 50 ppm of residual fluorosurfactants and/or a low TOC level.

The invention further relates to a process for reducing impurities and improving color stability during heat processing of a fluoropolymer, comprising the steps of:
a) polymerizing a fluoropolymer in aqueous media to produce an aqueous fluoropolymer dispersion or suspension;
b) feeding said aqueous fluoropolymer composition into a dewatering extruder in which the steps of coagulation, washing, dewatering and venting/degassing occur, to produce a solid fluoropolymer composition having residual surfactant at from 0.001 to less than 50 ppm.

The invention further relates to a process for forming a fluoropolymer composite comprising
a) polymerizing a fluoropolymer in aqueous media to produce an aqueous fluoropolymer dispersion or suspension;
b) adding from 0.1 to 30 weight percent of other materials into said aqueous fluoropolymer dispersion or suspension, said weight percent based on the total solids of fluoropolymer and other materials, to form an aqueous fluoropolymer composite composition;
c) feeding said aqueous fluoropolymer composite composition into a dewatering extruder in which the steps of coagulation, washing, dewatering and venting/degassing occur, to produce a solid fluoropolymer composition having residual surfactant at from 0.001 to less than 50 ppm.

### Brief Description of the Figures

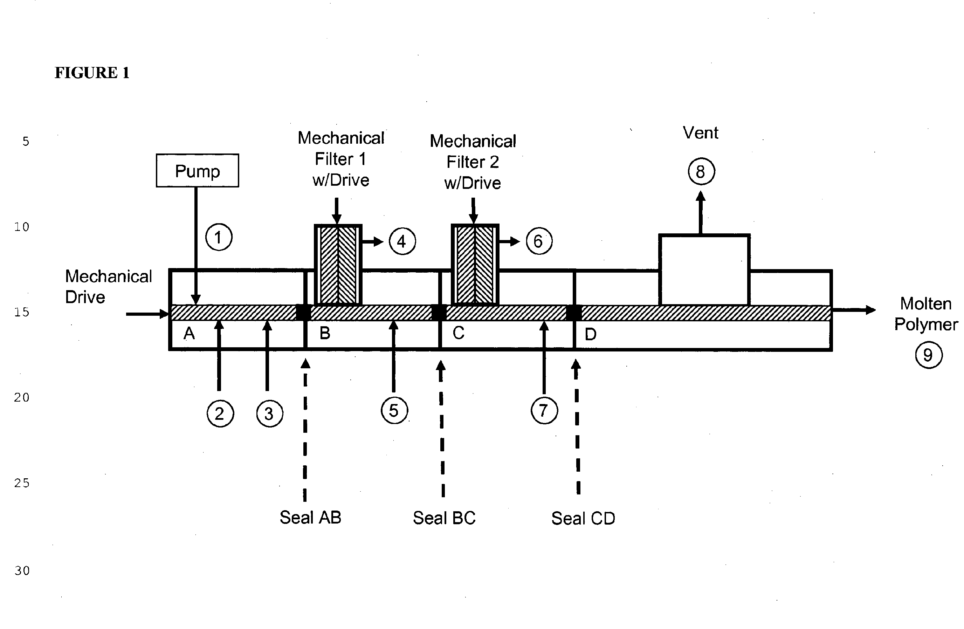

Figure 1: Figure 1 is a schematic drawing of a twin-screw extruder used in this invention.

### Detailed Description of the Invention

The invention relates to the use of a single twin-screw dewatering extruder to produce a solid, dried fluoropolymer composition having a low level of impurities, from an aqueous-based fluropolymer suspension or dispersion. Of particular interest is the removal of fluorsurfactant from polyvinylidene fluoride (PVDF) polymer dispersions.

Unless stated otherwise, all percentages are weight percent, and all molecular weights provided are weight average molecular weights.

"Fluorinated surfactant" and "fluoro-surfactant" as used herein means that the main surfactant chain contains fluorine atoms whereas in the present invention non-fluorinated surfactants means that there is no fluorine on the main chain, however the terminal groups can contain fluorine atoms.

The term "copolymer" is used herein to describe a polymer having two of more different monomer units, and could be a terpolymer, or polymer having more than three different monomer units. The copolymers formed may be heterogeneous or homogeneous, and may have a controlled architecture such as star, branch random or block copolymers.

### Fluoropolymers

The fluoropolymers useful in the invention are those containing at least 50 weight percent of one or more fluoromonomers, preferably at least 75 weight percent of fluoromonomers and more preferably from 80 to 100 weight percent of fluoromonomers. The term "fluoromonomer" as used according to the invention means a fluorinated and olefinically unsaturated monomer capable of undergoing free radical polymerization reaction. Suitable exemplary fluoromonomers for use according to the invention include vinylidene fluoride, vinyl fluoride, trifluoroethylene, tetrafluoroethylene (TFE), ethylene tetrafluoroethylene, hexafluoropropylene (HFP), 2,3,3,3-tetrafluoropropene, and their respective copolymers. Preferred fluoropolymers are polyvinylidene fluoride homopolymer (PVDF) or copolymers thereof, polytetrafluoroethylene homopolymer or copolymers thereof, polyethylene trifluoroethylene (ETFE), and chlorothrifluoroethylene (CTFE). Fluoro-terpolymers are also contemplated, including terpolymers such as those having tetrafluoroethylene, hexafluoropropene and vinylidene fluoride monomer units.

In one preferred embodiment, the fluoropolymer is a polyvinylidene. Polyvinylidene fluoride polymers of the invention include the homopolymer made by polymerizing vinylidene fluoride (VDF), and copolymers, terpolymers and higher polymers of vinylidene fluoride, where the vinylidene fluoride units comprise greater than 70 percent of the total weight of all the monomer units in the polymer, and more preferably, comprise greater than 75, more preferably greater than 80 weight percent of the total weight of the monomer units. Copolymers, terpolymers and higher polymers of vinylidene fluoride may be made by reacting vinylidene fluoride with one or more monomers from the group consisting of vinyl fluoride, trifluoroethene, tetrafluoroethene, one or more of partly or fully fluorinated alpha-olefins such as 3,3,3-trifluoro-1-propene, 1,2,3,3,3-pentafluoropropene, 3,3,3,4,4-pentafluoro-1-butene, and hexafluoropropene, 2,3,3,3-tetrafluoropropene (1234yf), the partly fluorinated olefin hexafluoroisobutylene, perfluorinated vinyl ethers, such as perfluoromethyl vinyl ether, perfluoroethyl vinyl ether, perfluoro-n-propyl vinyl ether, and perfluoro-2-propoxypropyl vinyl ether, fluorinated dioxoles, such as perfluoro(1,3-dioxole) and perfluoro(2,2-dimethyl-1,3-dioxole), allylic, partly fluorinated allylic, or fluorinated allylic monomers, such as 2-hydroxyethyl allyl ether or 3-allyloxypropanediol, and ethene or propene.

Preferred copolymers include those comprising from about 60 to about 99 weight percent, preferably from 71 to 98 weight percent VDF, and correspondingly from about 1 to about 40 weight percent, preferably 2 to 29 weight percent TFE; from about 60 to about 99 weight percent, preferably from 71 to 98 weight percent VDF, and correspondingly from about 1 to about 40 weight percent, preferably 2 to 29 weight percent HFP, and from about 60 to about 99 weight percent, preferably from 71 to 98 weight percent VDF, and correspondingly from about 1 to about 40 weight percent, preferably 2 to 29 weight percent chlorotrifluoroethylene (CTFE).

Preferably the fluoropolymers for use in the invention would be melt-processible fluoropolymers - generally defined as having a polymer crystalline melting point of less than 300°C. Useful melt processible fluoropolymers include:
- FEP - polymers made from TFE and HFP
- ETFE - polymers made from ethylene and TFE
- PCTFE - polymers made from CTFE
- ECTFE - polymers made from ethylene and CTFE
- 1234yf - polymers and copolymers made from 2,3,3,3-tetrafluoropropene
- PVF - polymers made from VFP.
Preferably, the fluoropolymers are thermoplastics, and not fluoroelastomers.

While the invention applies to all aqueous-based fluoropolymer compositions, and all surfactants and water-soluble or water-miscible impurities, made by any water-based polymerization method, the invention will be illustrated herein in its relation to polyvinylidene fluoride, to fluorosurfactants, and to emulsion polymers. One of skill in the art can use teachings herein to apply this technology to other fluoropolymer compositions, other surfactants or impurities, and other aqueous-based polymerization methods.

### Process of Art:

A typical process in the art for emulsion polymerization and isolation of fluoropolymers involves these process steps: 1) Semi-Batch emulsion polymerization 2) Filtration of the aqueous dispersion 3) Coagulation by mechanical or chemical means 4) Water washing 5) Decanting 6) Drying (to form a powdered solid) and 7) Extrusion for melt-processable grades (if an extruded shape is desired). This process is limited in its ability to remove fluorosurfactants and other emulsifiers from the resulting fluoropolymer. Typically, as the examples will show, the emulsifier may be reduced from approximately 1000-2000 ppm (based on polymer weight) during the polymerization down to approximately 50-150 ppm emulsifier in the final isolated solid polymer. These residual levels are considered too high to be ideal for high-purity applications and optimum color stability during melt processing of the fluoropolymer.

### Polymerization

The polymerization of the fluoropolymer may occur in a batch, semi-batch or continuous polymerization process. An emulsion process is preferred, though a suspension process may also be used. The reactor is a pressurized polymerization reactor equipped with a stirrer and heat control means. The temperature of the polymerization can vary depending on the characteristics of the initiator and monomers used, but it is typically between 50° and 135°C, and most conveniently it is between 70° and 120°C. The temperature is not limited to this range, however, and might be higher or lower if a high-temperature or low-temperature initiator is used. The pressure of the polymerization is typically between 1380 and 8275 kPa for PVDF polymerization, but it can be higher if the equipment permits operation at higher pressure. The pressure is most conveniently between 3450 and 5520 kPa.

In an emulsion polymerization process, a reactor is charged with deionized water, and a water soluble surfactant capable of emulsifying the reactor mass during polymerization. The reactor and its contents are then deoxygenated while stirring. The reactor and contents are heated to the desired temperature and monomers (preferably vinylidene fluoride), and optionally other materials are added, such as but not limited to, chain transfer agents to control copolymer molecular weight, a paraffin antifoulant, and buffering agent to maintain a controlled pH during the polymerization reaction. When the desired reaction pressure is reached, initiator is introduced to start polymerization and maintain the reaction. All feeds will then be stopped, and the reaction completed. Residual gases (containing unreacted monomers) are vented and the latex recovered from the reactor. In the polymerization process, the monomers, initiator, emulsifier and other materials could be added all upfront prior to polymerization, fed continuously during the polymerization, fed partly before and then during polymerization, or fed after polymerization started and progressed for a while.

The radical initiator may be one or a combination of more than one of the initiators known in the art to be useful in the emulsion polymerization of halogenated monomers. Suitable nonlimiting classes of initiators include persulfate salts, peroxides, and redox systems.

The surfactants of the invention can be fluorinated, non-fluorinated, or a mixture thereof. The surfactants and emulsifiers are typically used in an amount from about 0.02 to about 1.0 weight percent on total monomer. Preferably they are used in an amount from about 0.05 to about 0.5 weight percent on total monomer. In a preferred embodiment, the surfactants include at least one fluorinated surfactant. Useful fluorosurfactants include salts of the acids of the formula X (CF2)nCOOM, wherein X is hydrogen or fluorine, M is an alkali metal, ammonium, substituted ammonium (e.g., alkylamine of 1 to 4 carbon atoms), or quaternary ammonium ion, and n is an integer from 6 to 20; sulfuric acid esters of polyfluoroalkanols of the formula X (CF2)nCH2OSO3M where X and M are as above; and salts of the acids of the formula CF3(CF2)n(CX2)mSO3M, where X and M are as above; n is an integer from 3 to 7, and m is an integer from 0 to 2, such as in potassium perfluoroctyl sulfonate.

The dispersion formed by the process of the invention generally has a solids level of from 5 to 65 weight percent, preferably from 10 to 55 weight percent. The fluoropolymer particles in the dispersion have a particle size in the range of 30 to 500 nm, and preferably from 100 - 350 nm. Fluoropolymer of the invention have a weight average molecular weight of from 50,000 to 5,000,000, preferably 100,000 to 3,000,000, and more preferably 150,000 to 1,000,000.

### Dewatering Extruder

Following polymerization, the fluoropolymer emulsion or suspension is pumped into a dewatering extruder to isolate the fluoropolymer solids. The dewatering extruder combines the steps of coagulation, washing, dewatering and venting/degassing in a single, twin-screw extruder unit operation. - The equipment employed by this invention is represented in Figure 1.

This extruder and screws are of the same general type as described in US. Pat. 4,148,991. The preferred design is a counter-rotating non-intermeshing screw design. For production purposes, for example, the screws can have an outer diameter of 50 mm to 250 mm and a screw length of 35-80 times the screw diameter (35-80D) depending on the number of dewatering stages.

The twin screw extruder generally has an open forward-flighted screw design to carry material towards the exit of the screw. The exception to this are several "seal" or "restrictor" sections which divide the extruder typically into 3-5 zones zones of operation. These "seal" or "restrictor" elements can be either a) non-flighted elements b) forward flighted elements, or c) reverse-flighted elements.

Figure 1 shows one embodiment of the invention, having an extruder with 4 distinct zones of operation. Zone A is for feeding and coagulation of the aqueous dispersion. Zone B is for washing and dewatering. Zone C is a 2^{nd} zone for washing and dewatering. Zone D is for degassing and pumping. The discharge of Zone D will be a molten polymer under pressure and it is normally fed to a pelletizer for making solid polymer pellets for sale. The molten polymer could also be fed to a different extrusion die which can make other solid shapes for various applications (sheet, film, etc.)

In other embodiments of the invention, there may only be one washing and dewatering zone (eliminate Zone C on Figure 1), or there could be three or more zones of washing and dewatering (add additional zones to Figure 1). The preferred configuration for PVDF processing has two zones of washing dewatering as shown in Figure 1.

A pump is used to inject an aqueous dispersion, suspension or solution (**1** in Fig. 1) into Zone A of the dewatering extruder. Typical composition for this aqueous stream is from 10-60 percent fluoropolymer. The dispersion quickly comes into contact with steam that is injected into the screw area (**2**). The steam injection should have sufficient energy to raise the aqueous dispersion to a temperature close to it's polymer crystalline melt point (if the polymer has crystallinity). In the case of PVDF homopolymer with a crystalline melt point of 165-170°C, steam injection is required to heat the mixture close to the crystalline melting point. For PVDF, high-purity steam with pressures of 27.58 to 41.37 bar have typically been used for this purpose. In many cases, this rise in temperature from the steam will effectively complete the coagulation. This is the preferred process, since it maintains the highest purity for the fluoropolymer. Depending on the exact fluoropolymer system, one or more chemical coagulants (**3**) may optionally be added to complete the coagulation. The coagulant (such as an acid or salt) is chosen based on the specific chemistry of the aqueous dispersion system.

The screws push the coagulated fluoropolymer mixture over the restrictor seal (**Seal AB** in Figure 1) into Zone B, the first washing/dewatering zone. Typically the screw channels are more shallow just upstream of **Seal AB** in order to provide increased pumping capability to force the mixture past the seal area.

In Zone B, the screws continue to pump the coagulated polymer forward. However, the downstream seal (**Seal BC**) is designed to create enough restriction that water does not want to flow forward through **Seal BC**, but instead flows backwards towards an optional **Mechanical Filter 1** in Zone B. Water is removed from the mixture at the discharge of the mechanical filter (**4**). The process of the invention preferably uses the mechanical filter to assist in the separation of water and polymer as the water exits the machine. It is desirable to minimize the polymer coming out with the water. Figure 1 shows two mechanical filters, one for each of the washing/dewatering zones. In one embodiment, each mechanical filter has a pair of rotating screws driven by a motor. The mechanical filter is housed in a pipe the lower end of which extends through the barrel and is in open communication with the interflight spaces of the screw. At its upper end the housing is provided with a discharge line (shown as number 4 or 6). The revolving screws of the mechanical filter permit the flow of liquid, but catch entrained solids to return them to the main extruder screws.

In other embodiments the mechanical filter is replaced by a simple static filter or screen, however, this can get blocked or plugged during operation due to solids. The use of the preferred mechanical filter can prevent the blockage. In another embodiment of the invention the mechanical filter can be replaced by a simple open pipe, however, this can lead to increased discharge of entrained solids. Solids losses must either be recovered and re-used or else discarded with the waste water. The mechanical filter is preferred to minimize the cost of increased discharge of entrained solids.

The discharge pressure of stream **4** can be elevated using control valves to achieve a pressure higher than ambient. By increasing this pressure, the discharge temperature of **4** can be elevated due to the higher equilibrium temperature of water at this pressure. This effect can enhance the water solubility of impurities in the waste water stream since solubility typically increases with temperature. For PVDF, it is preferred to operate stream 4 with a discharge pressure of 0.69 to 6.89 bar, with the best operation in the range of 1.38 to 4.14 bar.

As the polymer/water mixture moves through Zone B, water can be injected (stream **5** in Fig. 1) to further wash the polymer in this zone. Most of this additional wash water (**5**) will be discharged in the Mechanical Filter 1 discharge (**4**). It is estimated that between 85-95% of the total water entering in streams **1**, **2**, **3**, and **5** is discharged in stream **4.** As in Zone A, the screws push the now molten fluoropolymer/water mixture over the restrictor seal (**Seal BC** in Figure 1) into Zone C, the second washing/dewatering zone. Typically the screw channels are more shallow just upstream of **Seal BC** in order to provide increased pumping capability to force the mixture past the seal area.

Zone C operates in a similar manner as Zone B. It provides a second washing/dewatering zone which is estimated to reduce the water content of the fluoropolymer to the range of 1-10% water/ 90-99% polymer passing through Seal CD. This is desirable for achieving low residual water content of the final product. If too much water flows forward to Zone D, then the venting/degassing zone may not be sufficient to achieve low final water levels. Also, Zone C provides another stage of washing with water to further remove water-soluble impurities from the polymer. Preferably for PVDF, 2-3 dewatering stages with a screw length of 60-72 times the screw diameter (60-72 D) is used.

In Zone C, the screws continue to pump the polymer forward. However, the downstream seal (**Seal CD**) is designed to create enough restriction that water does not want to flow forward through **Seal CD**, but instead flows backwards towards the **Mechanical** Filter **2** in Zone C. Water is removed from the mixture at the discharge of the mechanical filter (**6**).

The discharge pressure of stream **6** can be elevated using control valves to achieve a pressure higher than ambient. By increasing this pressure, the discharge temperature of **6** can be elevated due to the higher equilibrium temperature of water at this pressure. This effect can enhance the water solubility of impurities in the waste water stream since solubility typically increases with temperature. For PVDF, it is preferred to operate stream 6 with a discharge pressure of 0-3.45 bar, with the best operation in the range of 0-1.38 bar.

As the polymer/water mixture moves through Zone C, water can be injected (stream **7** in Fig. 1) to further wash the polymer in this zone. Most of this additional wash water (**7**) will be discharged in the Mechanical Filter 1 discharge (**6**). As in Zone B, the screws push the now molten fluoropolymer/water mixture over the restrictor seal (**Seal CD** in Figure 1) into Zone D, the degassing/pumping zone. Typically the screw channels are more shallow just upstream of **Seal CD** in order to provide increased pumping capability to force the mixture past the seal area.

In Zone D, the residual water is removed to a great extent as a vapor through a vent (stream **8** in Fig. 1). The resulting polymer solids is generally greater than 95 percent, preferably greater than 98 percent, and most preferably greater than 99 percent. Residual volatiles other than water may also be removed to a degree depending on their volatility. The vent can be operated at atmospheric pressure, however for best removal of water and volatiles, it is normally operated under vacuum in the range of 50-500 mbar absolute. A final water content of less than 0.1% is desired. The preferred pressure for stream 8 for PVDF was found to be in the range of 50-200 mbar absolute.

A mechanical filter similar to those described above can be used in place of an open vacuum vent to reduce the amount of polymer solids entering the vent.

Downstream from the vent section, the screw channels in Zone D become more shallow to optimize the screws ability to generate pressure suitable for extrusion. In one embodiment, one of the twin-screws terminates about 5-10 diameters upstream of the discharge of the machine. In this case, the molten polymer from both screws is combined in a single-screw section for the last 5-10 diameters of the extruder just before discharge. This single-screw section can optimize the ability of the extruder to generate higher discharge pressures. The final molten polymer is discharged in stream 9. The discharge usually enters an extrusion die suitable for making pellets or others shapes as required.

In one embodiment, it is useful to reduce the polymer temperature at the end of the extruder to optimize color - this can be done with an optional water wash to cool the polymer.

In all water washes, the water is preferably pre-heated to avoid instability in the process.

### Final Solid Fluoropolymer/Properties

The fluoropolymer produced by the dewatering extruder process of the invention has a low level of water soluble or water immiscible impurities. The impurities include fluorosurfactants, non-fluorosurfactants, and other water soluble or water immiscible impurities. The level of impurities is less than 50 ppm, preferably less than 30 ppm, more preferably less than 20 ppm, and even more preferably less than 10 ppm. Fluorosurfactant levels range from 0.0001 ppm to 30 ppm, preferably from 0.001 to 20 ppm, and more preferably from 0.001 to 10 ppm.

The low level of impurities provides a high level of color stability during melt processing. The color stability, measured as a shift in YI. upon heat aging or after melt processing, the resin of this invention will exhibit a whiteness improvement, ΔYI, of greater than 2 units, and preferably greater than 3 units, relative to polymer processed by the processes of the art (using separate unit operations of filtration of the aqueous dispersion; coagulation by mechanical or chemical means; water washing; decanting, and drying to form a powdered solid), as measured on 1/8 inch thick plaques using a Minolta CR-300 Chroma Meter, under C/2° conditions using ASTM Method D1925. YI plaques are produced by compression-molding pellets at 232.22°C or 10 minutes to form a 0.003175 m thick plaque.

The TOC levels of the fluoropolymer composition and TOC levels after melt processing are reduced by using the processing of the invention, when compared to the same fluoropolymer and surfactant finished by the process of the art. TOC levels for fluoropolymer compositions produced using non-fluorinated surfactants are found to be below 30,000 ppb, preferably below 25,000 ppb, and more preferably below 20,000 ppb.

In one embodiment of the invention a composite polymer composition is produced by adding materials into the aqueous fluoropolymer dispersion or suspension between polymerization and entry into the dewatering extruder. The materials should be non-water soluble. Useful materials include talc and other minerals, carbon black, graphite fibers, glass fibers, exfoliated nanoclays, carbon nanotubes, ZnO and other metal salts and oxides. The materials are mixed into the composition in the extruder, and produce composite pellets, such as a conductive PVDF. This is especially useful for materials in a latex or aqueous dispersion or suspension form. The blending of the materials with the fluoropolymer in the dewatering extruder produces nanoscale mixing.

The process of the invention for the production of fluoropolymer has several advantages over the finishing processes of the art;
a) The fluoropolymer produced has a very low level of water-soluble or water-miscible impurities, and in particular lower levels of fluorosurfactant (0.001 to less than 50 ppm);
b) The fluoropolymer produced has very good heat stability (low yellowing during heat processing, defined as a change in YI of greater than 2 units compared to a process without a dewatering extruder);
c) A single unit operation replaces a series of more complicated operations;
d) A fluoropolymer pellet can be produced without going through a powder stage.
e) Coagulation and isolation can be done without the use of coagulants - resulting in a more pure, less contaminated product;

### Examples

The following examples are set forth to demonstrate the invention but are not to be construed as narrowing the breadth thereof.

The aqueous dispersions of PVDF used in these examples were made by emulsion polymerization with fluorosurfactants. The average diameter of latex particle sizes after polymerization was 0.2-0.3 microns.

**Example 1 (comparative):** A polyvinylidene fluoride emulsion copolymer with hexafluoropropene made with 1825 ppm (based on polymer weight) of ammonium perfluorooctanoate (APFO) surfactant is processed through a conventional isolation process consisting of: Filtration, coagulation by mechanical shear, water washing, decanting, spray drying, and extrusion to form pellets. High-purity DI water was used for all process streams.

After this isolation process the final product has these properties:
- 40-150 ppm (by weight) residual APFO surfactant as measured by LC/MS after first extracting the impurities from the polymer using supercritical CO₂ fluid extraction.
- Yellowness index (Y.I.) after compression molding 0.003175 m thick plaques at 232.22°C for 10 minutes = 11-14 (as measured by ASTM Method D1925)

Yellowness Index is a measure of how yellow the polymer becomes upon thermal stress. It is a repeatable test to indicate the color stability of the polymer upon melt processing.

### Examples 2-5

In examples 2-5, a counter-rotating non-intermeshing twin-screw extruder with screws having outer diameters of 30mm and a total screw length of 78 diameters (92 inches) is used to process PVDF emulsions made with APFO surfactant. The extruder configuration is described by Figure 1. The extruder barrel surfaces and screws were made of high nickel alloy metals. High-purity DI water was used for all process streams.

The molten polymer was discharged from the extruder into a strand die. The polymer strands were in a water bath, and cut into pellets. The details of the process conditions are shown in the tables.

As seem in these examples, the residual APFO is greatly reduced compared to conventional processing (example 1). Also, the Yellowness Index (Y.I.) is 2-4 units lower (less yellow) compared to Example 1 (conventional processing). This surprising result indicates that the color stability for melt processing has improved.

See Table 1 discloses details of the process conditions.

**TABLE 1: PVDF/HFP copolymer Made with APFO Surfactant**

| | | | | | |
|---|---|---|---|---|---|
| | | | | | |

| Example | 1 | 2 | 3 | 4 | 5 |
|---|---|---|---|---|---|
| Product: | PVDF/HFP made with APFO Surfactant | | | | |
| Polymer | PVDF | PVDF | PVDF | PVDF | PVDF |
| Surfactant: | APFO | APFO | APFO | APFO | APFO |
| Melting Point (deg C) | 165 - 172 | 167 - 169 | 167 - 169 | 167 - 169 | 167 - 169 |
| Melt Viscosity (KPa @ 230 deg C @ 100 sec-1) | 17.3 - 22.5 | 190 - 19.2 | 190 - 192 | 190 - 192 | 190 - 192 |
| Approximate level of surfactant in aqueous dispersion after polymerization (ppm based on polymer weight) | 1825 | 1825 | 1825 | 1825 | 1825 |
| | | | | | |
| Stream 1: Latex Feed Rate (kg/h) | This | 172.4 | 154.2 | 143.3 | 136.1 |
| Stream 1: Latex Feed Polymer Content (%) | | 21 | 22 | 26 | 26 |
| Stream 2 Steam Injection Rate (kg/h) | sample | 36.29 - 40.82 (estimated) | 36.29 - 40.82 (estimated) | 34.02-38.55 (estimated) | 31.75-36.29 (estimated) |
| Stream 2: Steam Injection Pressure (bar) | was | 26.2-27.58 | 26.2-27.58 | 26.2-27.58 | 26.2-27.58 |
| Stream 3: Coagulant Feedrate | | 0 | 0 | 0 | 0 |
| Coagulation Zone Temp near seal AB (deg C) | prepared | 163 | 170 | 169 | 169 |
| Stream 4 Backpressure on Water 1 discharge (bar) | | 0 | 0 | 0 | 0 |
| Stream 5: Water Wash #1 Rate (kg/h) | | 32.66 | 18.14 | 18.14 | 24.04 |
| Stream 5 Water Wash #1 Injection Temp (deg C) | | 20-30 | 2030 | 20-30 | 20-30 |
| Stream 6 Backpressure on Water 2 discharge (bar) | using | 0 | 0 | 0 | 0 |
| Stream 7 Water Wash #2 Rate (kg/h) | conventional | 0 | 4.99 | 0 | 3.17 |
| Stream 7 Water Wash #2 Injection Temp (deg C) | process | 2030 | 20-30 | 20-30 | 20-30 |
| Stream 8 Vacuum Level at Vent (bar) | | 0.914 | 0.88 | 0.88 | 0.88 |
| Main Twin-Screw Extruder Speed (rpm) | | 290 | 362 | 375 | 375 |
| Zone A Barrel Temperature (deg C) | | 227 | 260 | 260 | 260 |
| Zone B Barrel Temperature (deg C) | | 227 | 260 | 260 | 260 |
| Zone C Barrel Temperature (deg C) | | 227 | 260 | 260 | 260 |
| Zone D Barrel Temperature (deg C) | | 227 | 260 | 260 | 260 |
| | | | | | |

| **Evaluation of Product** | | | | | |
|---|---|---|---|---|---|
| **COLOR - 10 Minute** Yellowness Index from Plaques | 11 - 14 | 8.3 | 8.5 | 8.5 | 7.8 |
| | | | | | |
| **RESIDUAL SURFACTANT LEVEL in Final Pellets -** APFO Levels in Pellets (ppm) | 50-150 | 2.4 | 6.3 | < 1 (not detected) | < 1 (not detected) |

**Example 6 (comparative case):** In this case, a polyvinylidene fluoride emulsion copolymer with hexafluoropropene made with (based on polymer weight) of surfactant from the family of C₄-C₁₂ -perfluoroalkane sulfonic acid salts is processed through a conventional isolation process consisting of: Filtration, coagulation by mechanical shear, water washing, decanting, spray drying, and extrusion to form pellets. High-purity DI water was used for all process streams. After this isolation process the final product has these properties:
- 60-160 ppm (by weight) residual surfactant (C₄-C₁₂ -perfluoroalkane sulfonic acid salt) as measured by LC/MS after first extracting the impurities from the polymer using microwave assisted extraction with methanol.
- Yellowness index (Y.I.) after compression molding 0.003175 m thick plaques at 232.22°C for 10 minutes = 33-60 (as measured by ASTM Method D 1925)

### Examples 7-10

In examples 7-10, a counter-rotating non-intermeshing twin-screw extruder with screws having outer diameters of 30mm and a total screw length of 78 diameters (92 2.3368 m) is used to process PVDF emulsions made with a surfactant from the family of C₄-C₁₂ -perfluoroalkane sulfonic acid salts. The extruder configuration is described by Figure 1. The extruder barrel surfaces and screws were made of high nickel alloy metals. High-purity DI water was used for all process streams.

The molten polymer was discharged from the extruder into a strand die. The polymer strands were in a water bath, and cut into pellets. The details of the process conditions are shown in the tables.

As seem in these examples, the residual surfactant is greatly reduced compared to conventional processing (example 1). Also, the Yellowness Index (Y.I.) is greatly reduced (less yellow) compared to conventional processing.
- 12-17 ppm (by weight) residual surfactant (C₄-C₁₂ -perfluoroalkane sulfonic acid salt) as measured by LC/MS after first extracting the impurities from the polymer using microwave assisted extraction with methanol.
- Yellowness index (Y.I.) after compression molding 0.003175 m thick plaques at 232.22 °C for 10 minutes = 12.6 - 14.3 (as measured by ASTM Method D1925)

This surprising result indicates that the color stability for melt processing has improved. Table 2 provides details of the process conditions.

### Examples 11-12

Examples 11 and 12 were done in a similar manner to Example 1, with the results given in Table 3. The fluorosurfactant was measured using supercritical CO₂ extraction.

### Examples 13 and 14

Examples 13 and 14 are similar fluoropolymer copolymers as Example 11 and 12, in which a non-fluorosurfactant was used in place of the fluorosurfactant. The results are given in Table 4.

### Examples 15 and 16

Examples 15 and 16 are similar fluoropolymer copolymers as Example 11 and 12, in which a non-fluorosurfactant was used in place of the fluorosurfactant. The results are given in Table 5. This example demonstrates the ability of the invention to reduce total oxidizable carbon (TOC) content, which improves the thermal stability of the polymer as observed by color (Y.I.) improvement.

**TABLE 2: PVDF/HFP Made with C4-C12-perfluoroalkane sulfonic acid salt surfactant**

| | | | | | |
|---|---|---|---|---|---|
| | | | | | |

| Example | 6 | 7 | 8 | 9 | 10 |
|---|---|---|---|---|---|
| Product | **PVDF/HFP** made with C4-C12 -perfluoroalkane sulfonic acid salt surfactant | | | | |
| Polymer: | PVDF | PVDF | PVDF | PVDF | PVDF |
| Surfactant | C4-C12 perfluoroalkane sulfonic acid salt surfactant | | | | |
| Melting Pomt (deg C) | 165 - 172 | 165 - 172 | 165 - 172 | 165 - 172 | 165 - 172 |
| Melt Viscosity (KPa @ 230 deg C @ 100 sec-1) | 17 - 22 | 17 - 22 | 17 - 22 | 17 - 22 | 17 - 22 |
| Approximate level of surfactant in aqueous dispersion after polymerization (ppm) | 2500 | 2300 | 2300 | 2300 | 2300 |
| | | | | | |
| Stream 1 Latex Feed Rate kg/h | This | 165.56 | 165.56 | 165.56 | 165.56 |
| Stream 1. Latex Feed Polymer Content (%) | | 20 | 20 | 20 | 20 |
| Stream 2 Steam Injection Rate kg/h | sample | 59.87 | 59.42 | 59.42 | 58.97 |
| Stream 2: Steam Injection Pressure bar | was | 34.47 | 34.47 | 34.47 | 34.47 |
| Stream 3: Coagulant Feedrate | | 0 | 0 | 0 | 0 |
| Coagulation Zone Temp near seal AB (deg C) | prepared | 177 | 180 | 185 | 183 |
| Stream 4: Backpressure on Water 1 discharge bar | | 3.24 | 3.52 | 3.58 | 3.99 |
| Stream 5: Water Wash #1 Rate kg/h | | 13.61 | 0 | 0 | 0 |
| Stream 5: Water Wash #1 Injection Temp (deg C) | | 149 | NA | NA | NA |
| Stream 6 Backpressure on Water 2 discharge bar | using | 0 | 0 | 0 | 0 |
| Stream 7: Water Wash #2 Rate kg/h | conventional | 15.87 | 15.87 | 15.87 | 15.87 |
| Stream 7: Water Wash #2 Injection Temp (deg C) | process | 118 | 118 | 116 | 116 |
| Stream 8 Vacuum Level at Vent bar | | -0.982 | -0.982 | 0 | -0.982 |
| Main Twin-Screw Extruder Speed (rpm) | | 182 | 180 | 180 | 180 |
| Zone A Barrel Temperature (deg C) | | 193 | 193 | 193 | 193 |
| Zone B Barrel Temperature (deg C) | | 193 | 193 | 193 | 193 |
| Zone C Barrel Temperature (deg C) | | 204 | 204 | 204 | 204 |
| Zone D Barrel Temperature (deg C) | | 204 | 204 | 204 | 204 |
| | | | | | |

| **Evaluation of Product at Labs** | | | | | |
|---|---|---|---|---|---|
| **COLOR- 10 Minute** Yellowness Index from Plaques | 33-60 | 14 3 | 12.6 | 12 9 | 10.1 |
| | | | | | |
| **RESIDUAL SURFACTANT LEVEL in Final Pellets -** Surfactant Levels in Pellets (ppm) | 60-160 | 12 | 12 | 17 | 11 |

**TABLE 3. PVDF/HFP Made with APFO Surfactant**

| | | |
|---|---|---|
| Example | 11 | 12 |
| Product | PVDF/HFP made with APFO Surfactant | |
| Polymer. | Copolymer VDF+HFP | Copolvmer VDF+HFP |
| Surfactant | APFO | APFO |
| Melting Point (deg C) | 144 | 144 |
| Melt Viscosity (KPa @ 230 deg C @ 100 sec-1) | 26.3 | 25.2 |
| Approximate level of surfactant in aqueous dispersion after polymerization (ppm based on polymer weight) | 1200 | 1200 |
| | | |
| Stream 1 Latex Feed Rate kg/h | 139.25 | 169.64 |
| Stream 1 Latex Feed Polymer Content (%) | 26 | 26 |
| Stream 2_{.} Steam Injection Rate Kg/h | 34.02-38.55 (estimated) | 38.55 -43.09 (estimated) |
| Stream 2: Steam Injection Pressure bar | 26.2-27.58 | 26.2-27.58 |
| Stream 3: Coagulant Feedrate | 0 | 0 |
| Coagulation Zone Temp near seal AB (deg C) | 176 | 165 |
| Stream 4: Backpressure on Water 1 discharge bar | 0 | 0 |
| Stream 5: Water Wash #1 Rate kg/h | 27.67 | 27.67 |
| Stream 5: Water Wash #1 Injection Temp (deg C) | 20-30 | 20-30 |
| Stream 6: Backpressure on Water 2 discharge bar | 0 | 0 |
| Stream 7: Water Wash #2 Rate kg/h | 3.45 | 3.45 |
| Stream 7: Water Wash #2 Injection Temp (deg C) | 20-30 | 20-30 |
| Stream 8: Vacuum Level at Vent (bar) | 0.88 | 0.88 |
| Main Twin-Screw Extruder Speed (rpm) | 280 | 353 |
| Zone A Barrel Temperature (deg C) | 243 | 243 |
| Zone B Barrel Temperature (deg C) | 243 | 243 |
| Zone C Barrel Temperature (deg C) | 243 | 243 |
| Zone D Barrel Temperature (deg C) | 243 | 243 |
| | | |

| **Evaluation of Product** | | |
|---|---|---|
| **COLOR - 10 Minute** Yellowness Index from Plaques | 4 - 6 | 6 - 7 |
| | | |
| **RESIDUAL SURFACTANT LEVEL in Final Pellets** APFO Levels in Pellets (ppm) | 4.7 | 6 7 |

**TABLE 4: PVDF/HFP Made with Non-fluorinated Surfactant**

| | | |
|---|---|---|
| Example | 13 | 14 |
| Product: | PVDF/HFP made with non-fluorinated Surfactant | |
| Polymer: | Copolymer - VDF+HFP | Copolymer - VDF+HFP |
| Surfactant: | non-ionic with segments of polyethylene glycol and polypropylene glycol | non-ionic with segments of polyethylene glycol and polypropylene glycol |
| Melting Point (deg C) | 161 - 167 | 161 - 167 |
| Melt Viscosity (KPa @ 230 deg C @ 100 sec-1) | 21 - 26 | 21 - 26 |
| Approximate level of surfactant in aqueous dispersion after polymerization (ppm based on polymer weight) | 750 | 750 |
| | | |
| Stream 1: Latex Feed Rate kg/h | | 183.7 - 190.51 |
| Stream 1: Latex Feed Polymer Content (%) | This | 20 |
| Stream 2: Steam Injection Rate kg/h | | 58.97 - 59.87 |
| Stream 2: Steam Injection Pressure bar | sample | 34.47 |
| Stream 3: Coagulant Feedrate | was | 0 |
| Coagulation Zone Temp near seal AB (deg C) | | 176-179 |
| Stream 4: Backpressure on Water 1 discharge bar | prepared | 1.72 - 2.96 |
| Stream 5: Water Wash #1 Rate kg/h | | 0 |
| Stream 5: Water Wash #1 Injection Temp (deg C) | | -- |
| Stream 6: Backpressure on Water 2 discharge bar | | 0 |
| Stream 7: Water Wash #2 Rate kg/h | using | 20.41 |
| Stream 7: Water Wash #2 Injection Temp (deg C) | conventional | 107 |
| Stream 8: Vacuum Level at Vent (bar) | process | 0.914 |
| Main Twin-Screw Extruder Speed (rpm) | | 201 |
| Zone A Barrel Temperature (deg C) | | 192 - 193 |
| Zone B Barrel Temperature (deg C) | | 192 - 193 |
| Zone C Barrel Temperature (deg C) | | 188 - 194 |
| Zone D Barrel Temperature (deg C) | | 188 - 194 |

| | | |
|---|---|---|
| **Evaluation of Product** | | |
| | | |
| **COLOR -10 Minute** Yellowness Index from Plaques | 15 - 16 | negative 7 to negative 9 |
| | | |
| **RESIDUAL SURFACTANT LEVEL in Final Pellets -** Surfactant Levels in Pellets (ppm) | Not Measured | Not Measured |

**TABLE 5: VDF+ HFP Copolymer with non-fluorinated Surfactant**

| Example | 15 | 16 |
|---|---|---|
| Product. | PVDF/HFP made with non-fluorinated Surfactant | |
| Polymer: | Copolymer - VDF+HFP | Copolymer - VDF+HFP |
| Surfactant: | non-ionic with segments of polyethylene glycol and polypropylene glycol | non-ionic with segments of polyethylene glycol and polypropylene glycol |
| Melting Point (deg C) | 130 - 138 | 130 - 138 |
| Melt Viscosity (KPa @ 230 deg C @ 100 sec-1) | 6 - 12 | 6 - 12 |
| Approximate level of surfactant in aqueous dispersion after polymerization (ppm based on polymer weight) | 750 | 750 |
| | | |
| Stream 1: Latex Feed Rate kg/h | | 158.76 |
| Stream 1: Latex Feed Polymer Content (%) | This | 20 |
| Stream 2: Steam Injection Rate kg/h | | 42.64 |
| Stream 2: Steam Injection Pressure (bar) | sample | 34.47 |
| Stream 3: Coagulant Feedrate | was | 0 |
| Coagulation Zone Temp near seal AB (deg C) | | 149 |
| Stream 4: Backpressure on Water 1 discharge bar | prepared | Not measured |
| Stream 5: Water Wash #1 Rate kg/h | | 27.22 |
| Stream 5: Water Wash #1 Injection Temp (deg C) | | 135 |
| Stream 6: Backpressure on Water 2 discharge (bar) | | Not measured |
| Stream 7: Water Wash #2 Rate kg/h | using | 0 |
| Stream 7: Water Wash #2 Injection Temp (deg C) | conventional | -- |
| Stream 8: Vacuum Level at Vent bar | process | atmospheric pressure |
| Main Twin-Screw Extruder Speed (rpm) | | 223 |
| Zone A Barrel Temperature (deg C) | | 171 |
| Zone B Barrel Temperature (deg C) | | 171 |
| Zone C Barrel Temperature (deg C) | | 204 |
| Zone D Barrel Temperature (deg C) | | 204 |
| | | |

| **Evaluation of Product at Arkema Labs** | | |
|---|---|---|
| **COLOR - 10 Minute** Yellowness Index from Plaques | 32 - 33 | 25 - 26 |
| | | |
| **Total Oxidizable Carbon (TOC) Leached from PVDF into Water -** Concentration in water in micrograms/liter (ppb)* | 52000 | 23000 |
| * - 90g PVDF pellets held in 450 ml of ultrapure water at 85 deg C for 7 days. TOC content of water is then measured | | |

## Claims

1. A process for reducing impurities, reducing TOC and improving color stability during heat processing of a fluoropolymer, comprising the steps of:
a) polymerizing a fluoropolymer in aqueous media using a fluorosurfactant, non-fluorosurfactant, or mixture thereof, to produce an aqueous fluoropolymer composition in the form of a dispersion or suspension;
b) feeding said aqueous fluoropolymer composition into a dewatering extruder in which the steps of coagulation, washing, dewatering and venting/degassing occur, to produce a solid fluoropolymer composition having residual surfactant level at from 0.001 to less than 50 ppm.

2. The process of claim 1, wherein coagulation is accomplished by steam coagulation.

3. The process of claim 1, wherein said dewatering extruder is a twin-screw counter-rotating extruder.

4. The process of claim 1, wherein two or more washing and dewatering steps occur in the dewatering extruder.

5. The process of claim 1, wherein said solid fluoropolymer composition is in the form of pellets, and said pellets are produced without going through a powder stage.

6. The process of claim 1, wherein said resulting solid fluoropolymer composition exhibits an improvement in YI of at least 2 units after melt processing compared to the same fluoropolymer and surfactant dispersion finished without a dewatering extruder.

7. The process of claim 1, wherein said resulting solid fluoropolymer composition exhibits an reduction in levels of TOC after melt processing when compared to the same fluoropolymer and non-fluorinated surfactant dispersion finished without a dewatering extruder.

8. The process of claim 1, wherein said fluoropolymer is selected from the group consisting of polyethylene trifluoroethylene, polychlorotrifluoroethylene, copolymers of tetrafluoroethylene and hexafluorpropylene, copolymers of ethylene and chlorotrifluoroethylene, copolymers of 2,3,3,3-tetrafluoropropene, homo- and copolymers of polyvinylidene fluoride.

9. The process of claim 1, wherein said fluoropolymer is a homo- or co-polymer of polyvinylidene fluoride, and wherein said screw length in the dewatering steps are 60 to 72 times the screw diameter.

10. The process of claim 4, wherein said fluoropolymer is a homo- or co-polymer of polyvinylidene fluoride, wherein said washing and dewatering steps have a mechanical filter with a drive, and wherein discharge pressure stream from the first mechanical mechanical filter is 1.38 to 4.14 bar, and the discharge pressure stream from the second mechanical filter is 0 to 1.38 bar.

11. The process of claim 1, wherein said process further comprises a step of lowering the temperature of the fluoropolymer exiting the extruder by cooling said fluoropolymer with water.

12. The process of claim 1, wherein the water used in the washing steps is pre-heated.

13. The process of claim 1 comprising, after said step a), the step of adding from 0.1 to 30 weight percent of one or more other materials into said aqueous fluoropolymer dispersion or suspension, said weight percent based on the total solids of fluoropolymer and other materials, to form an aqueous fluoropolymer composite composition; then the feeding said aqueous fluoropolymer composite composition into a dewatering extruder in which the steps of coagulation, washing, dewatering and venting/degassing occur, to produce a solid fluoropolymer composition having residual surfactant at from 0.001 to less than 50 ppm.

14. The process of claim 13, wherein said other materials are selected from the group consisting of talc and other minerals, carbon black, exfoliated nanoclay, graphite fibers, glass fibers, carbon nanotubes, ZnO and other metal salts and oxides.

15. The process of claim 13, wherein said other materials are in the form of an aqueous dispersion or suspension.

## Patentansprüche

1. Verfahren zur Verminderung von Verunreinigungen, zur Verminderung des TOC (Total Oxidizable Carbon; gesamter oxidierbarer Kohlenstoff) und zur Verbesserung der Farbstabilität während einer Wärmeverarbeitung eines Fluorpolymers, das die folgenden Schritte umfasst:
a) Polymerisieren eines Fluorpolymers in wässrigen Medien unter Verwendung eines Fluortensids, eines nicht fluorierten Tensids oder deren Gemischen zur Bildung einer wässrigen Fluorpolymerzusammensetzung in Form einer Dispersion oder Suspension;
b) Zuführen der wässrigen Fluorpolymerzusammensetzung in einen Entwässerungsextruder, in dem die Schritte Koagulation, Waschen, Entwässerung und Entlüften/Entgasen erfolgen, zur Bildung einer festen Fluorpolymerzusammensetzung mit einem Resttensidgehalt von 0,001 bis unter 50 ppm.

2. Verfahren nach Anspruch 1, worin die Koagulation durch eine Dampfkoagulation erreicht wird.

3. Verfahren nach Anspruch 1, worin es sich bei dem Entwässerungsextruder um einen gegenläufigen Doppelschneckenextruder handelt.

4. Verfahren nach Anspruch 1, worin in dem Extruder zwei oder mehr Wasch- und Entwässerungsschritte stattfinden.

5. Verfahren nach Anspruch 1, worin die feste Fluorpolymerzusammensetzung in Form von Pellets vorliegt und die Pellets ohne Durchlaufen einer Pulverstufe hergestellt werden.

6. Verfahren nach Anspruch 1, worin die resultierende feste Fluorpolymerzusammensetzung im Vergleich mit der gleichen, ohne einen Entwässerungsextruder verarbeiteten Fluorpolymer/Tensid-Dispersion nach der Schmelzverarbeitung eine Verbesserung bezüglich YI (Yellow Index; Vergilbungsindex) von zumindest zwei Einheiten aufweist.

7. Verfahren nach Anspruch 1, worin die resultierende feste Fluorpolymerzusammensetzung im Vergleich mit der gleichen, ohne einen Entwässerungsextruder verarbeiteten Fluorpolymer/nicht fluoriertes Tensid-Dispersion nach der Schmelzverarbeitung eine Verminderung bezüglich des TOC-Niveaus aufweist.

8. Verfahren nach Anspruch 1, worin das Fluorpolymer unter Polyethylentrifluorethylen, Polychlortrifluorethylen, Copolymeren von Tetrafluorethylen und Hexafluorpropylen, Copolymeren von Ethylen und Chlortrifluorethylen, Copolymeren von 2,3,3,3-Tetrafluorpropen und Homo- oder Copolymeren von Polyvinylidenfluorid ausgewählt ist.

9. Verfahren nach Anspruch 1, worin das Fluorpolymer ein Homo- oder Copolymer von Polyvinylidenfluorid ist und worin die Schneckenlänge in den Entwässerungsschritten das 60- bis 72-fache des Schneckendurchmessers beträgt.

10. Verfahren nach Anspruch 4, worin das Fluorpolymer ein Homo- oder Copolymer von Polyvinylidenfluorid ist, wobei bei dem Waschschritt und dem Entwässerungsschritt ein mechanischer Filter mit einem Antrieb eingesetzt wird, und worin der Auslassdruck des Stroms von dem ersten mechanischen Filter 1,38 bis 4,14 bar und der Auslassdruck des Stroms von dem zweiten mechanischen Filter 0 bis 1,38 bar beträgt.

11. Verfahren nach Anspruch 1, wobei das Verfahren einen weiteren Schritt umfasst, in dem die Temperatur des Fluorpolymers, das den Extruder verlässt, durch Kühlen des Fluorpolymers mit Wasser gesenkt wird.

12. Verfahren nach Anspruch 1, worin das in den Waschschritten verwendete Wasser vorgeheizt ist.

13. Verfahren nach Anspruch 1, das nach Schritt a) einen Schritt umfasst, bei dem 0,1 bis 30 Gew.-% eines oder mehrerer anderer Materialien in die wässrige Fluorpolymerdispersion oder -suspension eingebracht werden, wobei der prozentuale Gewichtsanteil auf den Gesamtfeststoffen des Fluorpolymers und der anderen Materialien basiert, zur Bildung einer wässrigen Fluorpolymermischung; sowie anschließend das Zuführen der wässrigen Fluorpolymermischung in den Entwässerungsextruder, in dem die Schritte Koagulation, Waschen, Entwässerung und Entlüften/Entgasen erfolgen, zur Bildung einer festen Fluorpolymerzusammensetzung mit einem Resttensidgehalt von 0,001 bis unter 50 ppm.

14. Verfahren nach Anspruch 13, worin die anderen Materialien unter Talk und anderen Mineralen, Ruß, delaminiertem Nanoton, Graphitfasern, Glasfasern, Kohlenstoff-Nanoröhren, ZnO und anderen Metallsalzen und -oxiden ausgewählt sind.

15. Verfahren nach Anspruch 13, worin die anderen Materialien als wässrige Dispersion oder Suspension vorliegen.

## Revendications

1. Procédé de réduction d'impuretés, de réduction de TOC (carbone oxydable total) et d'amélioration de stabilité de couleur pendant le traitement thermique d'un fluoropolymère, comprenant les étapes de :
a) polymérisation d'un fluoropolymère en milieu aqueux à l'aide d'un tensioactif fluoré, d'un tensioactif non fluoré, ou d'un mélange de ceux-ci, pour produire une composition de fluoropolymère aqueux sous forme d'une dispersion ou d'une suspension ;
b) amenée de ladite composition de fluoropolymère aqueux dans une extrudeuse d'assèchement dans laquelle les étapes de coagulation, de lavage, d'assèchement et d'êvacuation/de dégazage ont lieu, pour produire une composition de fluoropolymère solide ayant un taux de tensioactif résiduel de 0,001 à moins de 50 ppm.

2. Procédé selon la revendication 1, dans lequel la coagulation est accomplie par coagulation à la vapeur.

3. Procédé selon la revendication 1, dans lequel ladite extrudeuse d'assèchement est une extrudeuse contrarotative à double vis.

4. Procédé selon la revendication 1, dans lequel deux étapes de lavage et d'assèchement ou plus ont lieu dans l'extrudeuse d'assèchement.

5. Procédé selon la revendication 1, dans lequel ladite composition de fluoropolymère solide est sous forme de pastilles, et lesdites pastilles sont produites sans passer par une phase de poudre.

6. Procédé selon la revendication 1, dans lequel ladite composition de fluoropolymère solide résultante présente une amélioration d'YI (indice de jaunissement) d'au moins 2 unités après un traitement de fusion en comparaison à la même dispersion de fluoropolymère et de tensioactif finie sans extrudeuse d'assèchement.

7. Procédé selon la revendication 1, dans lequel ladite composition de fluoropolymère solide résultante présente une réduction de niveaux de TOC après un traitement de fusion lorsqu'elle est comparée à la même dispersion de fluoropolymère et de tensioactif non fluorée finie sans extrudeuse d'assèchement.

8. Procédé selon la revendication 1, dans lequel ledit fluoropolymère est choisi dans le groupe consistant en le poly(éthylène trifluoroéthylène), le poly(chlorotrifluoroéthylène), des copolymères de tétrafluoroéthylène et d'hexafluoropropylène, des copolymères d'éthylène et de chlorotrifluoroéthylène, des copolymères de 2,3,3,3-tétrafluoropropène, des homo- et co-polymères de poly(fluorure de vinylidène).

9. Procédé selon la revendication 1, dans lequel ledit fluoropolymère est un homo- ou co-polymère de poly(fluorure de vinylidène), et dans lequel la longueur de ladite vis dans les étapes d'assèchement est de 60 à 72 fois le diamètre de la vis.

10. Procédé selon la revendication 4, dans lequel ledit fluoropolymère est un homo- ou co-polymère de poly(fluorure de vinylidène), dans lequel lesdites étapes de lavage et d'assèchement comportent un filtre mécanique avec un entraînement, et dans lequel un flux de pression de décharge du premier filtre mécanique est de 1,38 à 4,14 bars, et le flux de pression de décharge du second filtre mécanique est de 0 à 1,38 bar.

11. Procédé selon la revendication 1, dans lequel ledit procédé comprend en outre une étape d'abaissement de la température du fluoropolymère sortant de l'extrudeuse en refroidissant ledit fluoropolymère à l'eau.

12. Procédé selon la revendication 1, dans lequel l'eau utilisée dans les étapes de lavage est préchauffée.

13. Procédé selon la revendication 1, comprenant, après ladite l'étape a), l'étape d'ajout de 0,1 à 30 pour cent en poids d'un ou plusieurs autres matériaux dans ladite dispersion ou suspension de fluoropolymère aqueux, ledit pourcentage en poids étant basé sur les matières solides totales de fluoropolymère et d'autres matériaux, afin de former une composition composite de fluoropolymère aqueux ; puis l'amenée de ladite composition composite de fluoropolymère aqueux dans une extrudeuse d'assèchement dans laquelle les étapes de coagulation, de lavage, d'assèchement et d'évacuation/de dégazage ont lieu, afin de produire une composition de fluoropolymère solide ayant un tensioactif résiduel à un taux de 0,001 à moins de 50 ppm.

14. Procédé selon la revendication 13, dans lequel lesdits autres matériaux sont choisis dans le groupe consistant en le talc et d'autres minéraux, le noir de carbone, la nanoargile exfoliée, des fibres de graphite, des fibres de verre, des nanotubes de carbone, ZnO et d'autres sels et oxydes métalliques.

15. Procédé selon la revendication 13, dans lequel lesdits autres matériaux sont sous forme d'une dispersion ou suspension aqueuse.
